# EUROPEAN PATENT APPLICATION

(11) **EP 2 565 600 A1**
(43) Date of publication of application: **06.03.2013**
(21) Application number: 11775015.8
(22) Date of filing: 26.04.2011
(51) Int. Cl.: G01H 3/00, G01S 7/523, G01S 3/803

(54) **DEVICE FOR DETECTING SOUNDS OUTSIDE VEHICLE**

(30) Priority: 30.04.2010 JP 2010105357
(71) Applicant: TOYOTA JIDOSHA KABUSHIKI KAISHA, Toyota-shi, Aichi-ken, 471-8571 (JP); Meijo University, Nagoya-shi, Aichi 468-8502 (JP)
(72) Inventor: KAWAMATA Shinya, Toyota-shi Aichi 471-8571 (JP); SATONAKA Hisashi, Toyota-shi Aichi 471-8571 (JP); FUNAYAMA Ryuji, Toyota-shi Aichi 471-8571 (JP); YAMADA Keiichi, Nagoya-shi Aichi 468-8502 (JP); YAMAMOTO Osami, Nagoya-shi Aichi 468-8502 (JP); BANNO Hideki, Nagoya-shi Aichi 468-8502 (JP); ASAHI Kensaku, Nagoya-shi Aichi 468-8502 (JP); OGAWA Akira, Nagoya-shi, Aichi 468-8502 (JP)
(74) Representative: Albutt, Anthony John
(86) International application number: PCT/JP2011/060185
(87) International publication number: WO 2011/136234

(57) **Abstract**

Provided is a device for detecting sound outside vehicle capable of detecting sounds outside the vehicle with high accuracy in various surrounding environments.

A sound source direction detecting ECU 1 acquires sound collection information about sounds outside a vehicle which are collected by microphones 2A to 2G. The sound source direction detecting ECU 1 acquires traveling road information about the vicinity of a host vehicle on the basis of the acquired sound collection information. When the traveling road information is acquired, the sound source direction detecting ECU 1 adjusts the sound collection characteristics of the microphones 2A to 2G on the basis of the traveling road information.

## Description

### Technical Field

The present invention relates to a device for detecting sound outside vehicle that is provided in a vehicle and detects a sound outside vehicle, which is a sound outside the vehicle.

### Background Art

As a device that detects a sound outside vehicle, which is a sound outside the vehicle, a sound source direction estimating device has been proposed which includes a plurality of microphones and detects predetermined sounds outside vehicle, such as traveling sounds of other vehicles (for example, see Patent Literature 1). The sound source direction estimating device cuts input signals to the plurality of microphones for time windows and calculates the estimated value of the direction of the sound source for a plurality of frequencies in each time window.

When the direction of the sound source is detected, the range of a direction which is estimated as the direction of the sound source is set in advance on the basis of various conditions. For positions beyond the range of the direction, when the estimated value of the direction is calculated, the detection result at the positions beyond the range of the direction is excluded. As such, since the detection result at the positions beyond the range of the estimated direction is excluded, it is possible to improve the accuracy of detecting the direction of the sound source for a predetermined sound when the direction of the sound source is roughly detected.

In addition, an approaching vehicle recognizing device has been proposed which detects a traveling sound of an approaching vehicle which approaches the host vehicle among the sounds outside the vehicle (for example, Patent Literature 2). The approaching vehicle recognizing device detects sound waves using a plurality of microphones and detects the direction of the approaching vehicle on the basis of the difference between the times when the sound waves reach the microphones.

### Citation List

### Patent Literature

[Patent Literature 1] Japanese Unexamined Patent Application Publication No. 2001-166025
[Patent Literature 2] Japanese Unexamined Utility Model Registration Application Publication No. 5-92767

### Summary of Invention

### Technical Problem

In the sound source direction estimating device disclosed in Patent Literature 1, when the direction of the sound source is estimated, attention is mainly focused on the characteristics of the sound source. However, since the characteristics of the sound source are changed with a variation in, for example, the surrounding environment of the vehicle, detection accuracy is likely to be reduced depending on the surrounding environment of the vehicle. The approaching vehicle recognizing device disclosed in Patent Literature 2 has the same problem as described above.

An object of the invention is to provide a device for detecting sound outside vehicle capable of detecting sounds outside the vehicle with high accuracy in various surrounding environments.

### Solution to Problem

In order to achieve the object, according to an aspect of the invention, a device for detecting sound outside vehicle includes: sound collecting means that is provided in a vehicle and collects sounds outside the vehicle; target sound detecting means for detecting a detection target sound from the sounds outside the vehicle which are detected by the sound collecting means; traveling road information detecting means for detecting traveling road information about a road on which the vehicle travels; and sound collection characteristic adjusting means for adjusting sound collection characteristics of the sound collecting means on the basis of the detection result of the traveling road information detecting means.

The device for detecting sound outside vehicle according to the above-mentioned aspect of the invention includes the sound collection characteristic adjusting means for adjusting the sound collection characteristics of the sound collecting means on the basis of the detection result of the traveling road information detecting means. Therefore, it is possible to adjust the sound collection characteristics of the sound collecting means according to the traveling road information about the road on which the vehicle travels. Therefore, it is possible to detect sounds outside the vehicle with high accuracy in various surrounding environments.

The device for detecting sound outside vehicle according to the above-mentioned aspect may further include direction detecting means for detecting the direction of the detection target sound on the basis of the detection result of the target sound detecting means.

The detection target sound may be a traveling sound of an approaching vehicle which approaches the vehicle.

As such, since the approaching vehicle which approaches the vehicle is detected, the driver can recognize the presence of the approaching vehicle. Therefore, the driver can prepare for a response to the presence of the approaching vehicle in advance.

The traveling road information detecting means may detect the shape of the road on which the vehicle travels as the traveling road information. In this case, the sound collection characteristic adjusting means may adjust a directivity of the sound collecting means as characteristics of the sound collecting means on the basis of the shape of the traveling road. When it is determined that the direction of the road on which the vehicle travels is decided on the basis of the shape of the traveling road, the sound collection characteristic adjusting means may adjust the directivity of the sound collecting means as the characteristics of the sound collecting means on the basis of the shape of the traveling road.

As such, when the shape of the road on which the vehicle travels is detected as the traveling road information, it is possible to estimate the direction in which the approaching vehicle approaches. As a result, it is possible to align the directivity of the sound collecting means with the direction of the sound source and thus detect the traveling sound of the approaching vehicle with high accuracy. Examples of the shape of the traveling road include a straight road, a curved road, an intersection, and the presence or absence of a one-way road. In addition, examples of the shape of the traveling road include the shape of the intersection, the number of roads at the intersection, and the direction of the roads when the traveling road is the intersection.

The traveling road information detecting means may detect, as the traveling road information, the surface type of a road which is close to the road on which the vehicle travels and on which the approaching vehicle travels. In this case, the sound collection characteristic adjusting means may adjust a band used by the sound collecting means as the characteristics of the sound collecting means on the basis of the surface type of the road on which the approaching vehicle travels.

When the surface type of the traveling road varies, the sound collection characteristics also vary. Specifically, for example, a frequency band, which is the band of the frequency used for calculation when the traveling sound of the approaching vehicle is detected, varies depending on the road surface type. Therefore, the band used by the sound collecting means is adjusted as the characteristics of the sound collecting means on the basis of the surface type of the road on which the approaching vehicle travels, and the sound collection characteristics corresponding to the surface type of the traveling road are used, thereby improving the accuracy of detecting the traveling sound of the approaching vehicle.

Examples of the road surface type include an asphalt road, a concrete road, and a gravel road. Examples of the traveling road close to the road on which the vehicle travels include a traveling road intersecting the road on which the vehicle travels and a traveling road adjacent to the road on which the vehicle travels. Examples of the traveling road adjacent to the road on which the vehicle travels include traveling roads in the range in which the sound collecting means can collect the traveling sound of the approaching vehicle from the road on which the vehicle travels.

The traveling road information detecting means may detect weather information about the vicinity of the road on which the vehicle travels as the traveling road information.

In this case, the sound collection characteristic adjusting means may change the sensitivity of the sound collecting means on the basis of the weather information.

The device for detecting sound outside vehicle according to the above-mentioned aspect of the invention may further include output means for outputting an alarm when it is determined that the approaching vehicle is present on the basis of the detection result of the target sound detecting means. The sound collection characteristic adjusting means may change the time when the alarm is output from the output means on the basis of the weather information.

The traveling road information detecting means may detect surrounding environment information about the vicinity of the vehicle as the traveling road information.

When it is determined that an environment in which the vehicle travels is inappropriate to detect the traveling sound of the approaching vehicle on the basis of the surrounding environment information, the target sound detecting means may stop the detection of the traveling sound of the approaching vehicle. When the detection of the traveling sound of the approaching vehicle is stopped, it may be notified that the traveling sound of the approaching vehicle is not detected.

The device for detecting sound outside vehicle according to the above-mentioned aspect of the invention may further include output means for outputting an alarm when it is determined that the approaching vehicle is present on the basis of the detection result of the target sound detecting means. When it is determined that an environment in which the vehicle travels is inappropriate to detect the traveling sound of the approaching vehicle on the basis of the surrounding environment information, the output means may stop the output of the alarm.

### Advantageous Effects of Invention

The device for detecting sound outside vehicle according to the invention can detect sounds outside the vehicle with high accuracy in various surrounding environments.

### Brief Description of Drawings

Fig. 1 is a block diagram illustrating the structure of a device for detecting sound outside vehicle according to the invention.
Figs. 2(a) to 2(c) are perspective views illustrating examples of the mounting of a microphone array in a vehicle.
Fig. 3 is a flowchart illustrating the process sequence of the device for detecting sound outside vehicle.
Fig. 4 is a schematic plan view illustrating an example of the road on which the vehicle travels.
Fig. 5(a) is a schematic plan view illustrating an example of the road (asphalt road) on which the vehicle travels and Fig. 5(b) is a graph illustrating the frequency of a traveling sound collected from the road.
Fig. 6(a) is a schematic plan view illustrating an example of the road (gravel road) on which the vehicle travels and Fig. 6(b) is a graph illustrating the frequency of a traveling sound collected from the road.
Fig. 7 is a schematic diagram illustrating a directivity adjusting device during sound collection.
Fig. 8 is a schematic diagram illustrating microphones used to adjust directivity during sound collection.
Fig. 9 is a schematic diagram illustrating another example of the microphones used to adjust directivity during sound collection.

### Description of Embodiments

Hereinafter, embodiments of the invention will be described with reference to the accompanying drawings. In the description of the drawings, the same components are denoted by the same reference numerals and the description thereof will not be repeated. For convenience of illustration, the scale and dimensions of the components in the drawings are not necessarily equal to the actual scale and dimensions.

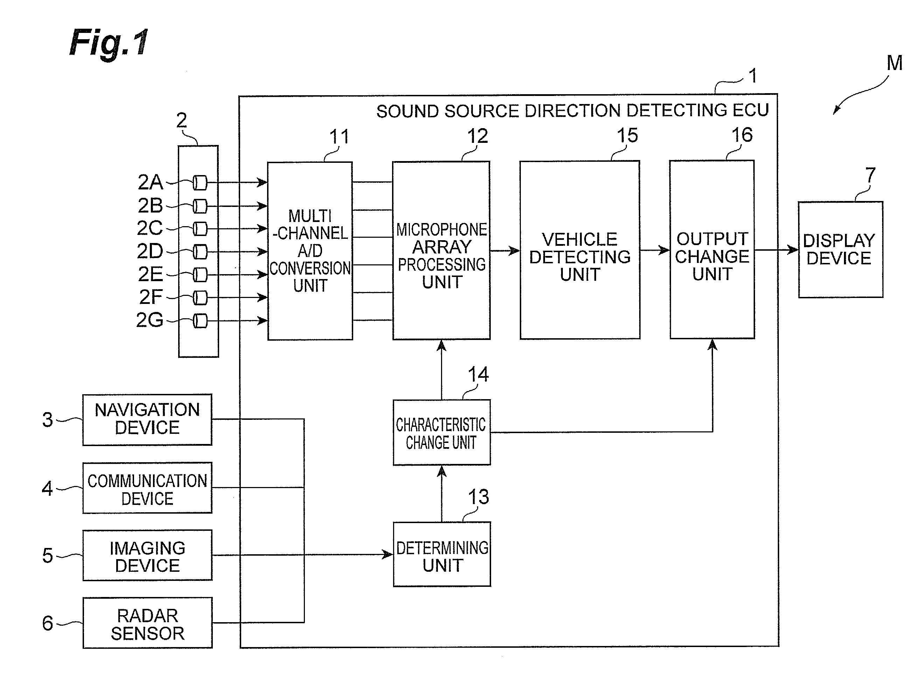

Fig. 1 is a block diagram illustrating the structure of a device for detecting sound outside vehicle according to an embodiment of the invention. As shown in Fig. 1, a device for detecting sound outside vehicle M according to this embodiment includes a sound source direction detecting ECU (Electronic Control Unit) 1. The sound source direction detecting ECU 1 is an electronic control unit including, for example, a CPU [Central Processing Unit], a ROM [Read Only Memory], and a RAM [Random Access Memory] (not shown). A microphone array 2, a navigation device 3, a communication device 4, an imaging device 5, and a radar sensor 6 are connected to the sound source direction detecting ECU 1. In addition, a display device 7 is connected to the sound source direction detecting ECU 1.

The sound source direction detecting ECU 1 further includes a multi-channel A/D conversion unit 11, a microphone array processing unit 12, a determining unit 13, and a characteristic change unit 14. In addition, the sound source direction detecting ECU 1 includes a vehicle detecting unit 15 and an output change unit 16.

The microphone array 2 includes a plurality of microphones. In this embodiment, the microphone array 2 includes seven microphones 2A to 2G. The microphones 2A to 2G of the microphone array 2 collect sounds around the vehicle. The microphones 2A to 2G transmit sound collection information about the collected sounds to the sound source direction detecting ECU 1. The microphones 2A to 2G correspond to sound collecting means according to the invention.

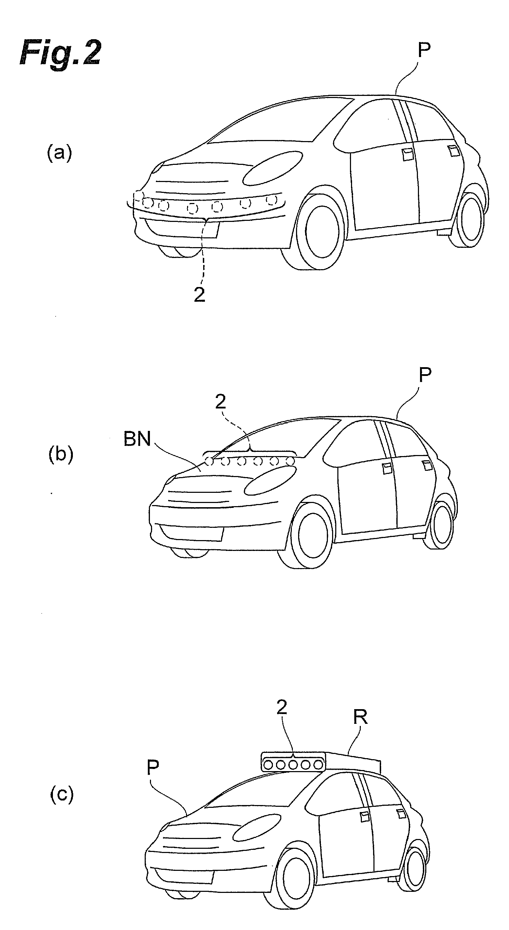

As shown in Fig. 2, the microphone array 2 is arranged in the width direction of a vehicle P. The microphone array 2 may be arranged in the bumper of the vehicle P as shown in Fig. 2(a) or it may be provided in the vicinity of the windshield in the hood BN as shown in Fig. 2(b). Alternatively, as shown in Fig. 2(c), the microphone array 2 may be provided in a roof carrier R on the roof of the vehicle P.

The navigation device 3 detects the current traveling position of the host vehicle using, for example, a GPS (Global Positioning System) and performs various kinds of route guidance to the destination. In addition, the navigation device 3 stores map information about the vicinity of the current position of the host vehicle. The navigation device 3 acquires traveling road vicinity information including surrounding environment information about a road shape, a road surface type, neighboring buildings, or other parked vehicles at the current traveling position of the host vehicle, on the basis of the stored map information. The surrounding environment information includes, for example, information about buildings or parked vehicles in the vicinity of the road. The navigation device 3 transmits, to the sound source direction detecting ECU 1, the acquired traveling road vicinity information about the vicinity of the traveling road at the current traveling position of the host vehicle.

The communication device 4 can communicate with, for example, a traffic information center that transmits and receives traffic information or a road-side device that is provided on the road close to the intersection. The communication device 4 receives various kinds of road information or weather information transmitted from the traffic information center or the road-side device. The road information includes, for example, information about a road shape, a road surface type, and neighboring buildings which is also included in the traveling road vicinity information. The communication device 4 transmits the received road information to the sound source direction detecting ECU 1.

The imaging device 5 is attached to the front side of the vehicle and captures an image around the vehicle. The imaging device 5 acquires traveling road vicinity information about the road on which the vehicle travels on the basis of the captured image. The traveling road vicinity information includes, for example, surrounding environment information and information about a road shape or a road surface type. The imaging device 5 transmits the acquired traveling road vicinity information to the sound source direction detecting ECU 1.

The radar sensor 6 is provided on the front side of the vehicle and detects surrounding environment information about, for example, other vehicles or buildings around the vehicle. The radar sensor 6 transmits the detected surrounding environment information about, for example, other vehicles to the sound source direction detecting ECU 1.

Each of the microphones 2A to 2G of the microphone array 2 is connected to the multi-channel A/D conversion unit 11. The multi-channel A/D conversion unit 11 converts the sound collection information transmitted from the microphones 2A to 2G into digital signals of each channel. The multi-channel A/D conversion unit 11 outputs the A/D-converted sound collection information to the microphone array processing unit 12.

The microphone array processing unit 12 generates sound source direction distribution data on the basis of the digital signals of each channel output from the multi-channel A/D conversion unit 11. For example, the traveling sound of an approaching vehicle which generates the traveling sound or other sounds are a sound source. The microphone array processing unit 12 outputs the generated sound source direction distribution data to the vehicle detecting unit 15.

The determining unit 13 performs a characteristic change determination process of determining whether to change and adjust sound collection characteristics, such as the frequency of the digital signal or the directivity of sound collecting means, when the direction of the sound source is determined, on the basis of various kinds of information transmitted from the navigation device 3, the communication device 4, the imaging device 5, and the radar sensor 6. The determining unit 13 outputs a characteristic change determination signal to the characteristic change unit 14 and the output change unit 16 on the basis of the result of the characteristic change determination process.

The characteristic change unit 14 determines the characteristics to be changed when the characteristic change determination signal output from the determining unit 13 indicates a change in characteristics when the direction of the sound source is estimated. When changing the characteristics, the characteristic change unit 14 outputs a characteristic change signal corresponding to the characteristics to be changed to the microphone array processing unit 12.

When the characteristic change signal is output from the characteristic change unit 14 and the sound source direction distribution data is generated, the microphone array processing unit 12 adjusts the processing of the digital signals of each channel output from the multi-channel A/D conversion unit 11. For example, when frequency characteristics are changed, the microphone array processing unit 12 generates the sound source direction distribution data on the basis of frequency characteristics corresponding to a change aspect.

The vehicle detecting unit 15 calculates a series of directions with the peak in the sound source direction distribution data which is acquired by the microphone array processing unit 12. The vehicle detecting unit 15 stores the calculated series of directions with the peak in the sound source direction distribution data. The vehicle detecting unit 15 detects whether there is an approaching vehicle and the approach direction (azimuth) of the vehicle.

In this case, the vehicle detecting unit 15 performs a clustering process on the top series of directions (in this embodiment, the stored top three series of directions) with the highest peak values in the sound source direction distribution data to group the directions with the peak in the sound source direction distribution data for each class. In addition, the vehicle detecting unit 15 calculates an average distance from the centroid (the centroid of the class) to each direction for each class and determines the possibility of the approaching vehicle arriving in the range of the direction on the basis of the average distance.

The average distance from the centroid to each direction indicates the degree of spreading of each direction. As the degree of spreading (the degree of variation) of each direction is reduced, the possibility of the approaching vehicle arriving from the range of the direction increases. In this way, the vehicle detecting unit 15 detects whether there is an approaching vehicle and the approach direction (azimuth) of the vehicle. The vehicle detecting unit 15 outputs approaching vehicle arrival information based on the direction in which the approaching vehicle is likely to arrive to the output change unit 16.

The output change unit 16 performs an output process for outputting an alarm on the basis of the approaching vehicle arrival information output from the vehicle detecting unit 15. In addition, the output change unit 16 changes the aspect of the output on the basis of the characteristic change determination signal output from the determining unit 13. The output change unit 16 outputs an alarm signal associated with the output process to the display device 7.

The sound source direction detecting ECU 1 detects the traveling sound of the approaching vehicle, which is a detection target sound, from the sounds outside the vehicle detected by the microphones 2A to 2G. The sound source direction detecting ECU 1 forms target sound detecting means according to the invention. In addition, the sound source direction detecting ECU 1 detects traveling road information about the road on which the vehicle travels and adjusts the sound collection characteristics of the microphones 2A to 2G on the basis of the detection result. The sound source direction detecting ECU 1 forms traveling road information detecting means and sound collection characteristic adjusting means according to the invention. In addition, the sound source direction detecting ECU 1 forms direction detecting means according to the invention since it detects whether there is an approaching vehicle and the approach direction (azimuth) of the vehicle.

The display device 7 includes a speaker which outputs a sound or a monitor which displays an alarm. When the alarm signal transmitted from the output change unit 16 indicates the presence of an approaching vehicle, the display device 7 outputs information about the approaching vehicle. In this embodiment, for example, a sound indicating the direction of the approaching vehicle is output from the speaker or the direction of the approaching vehicle is displayed on the monitor.

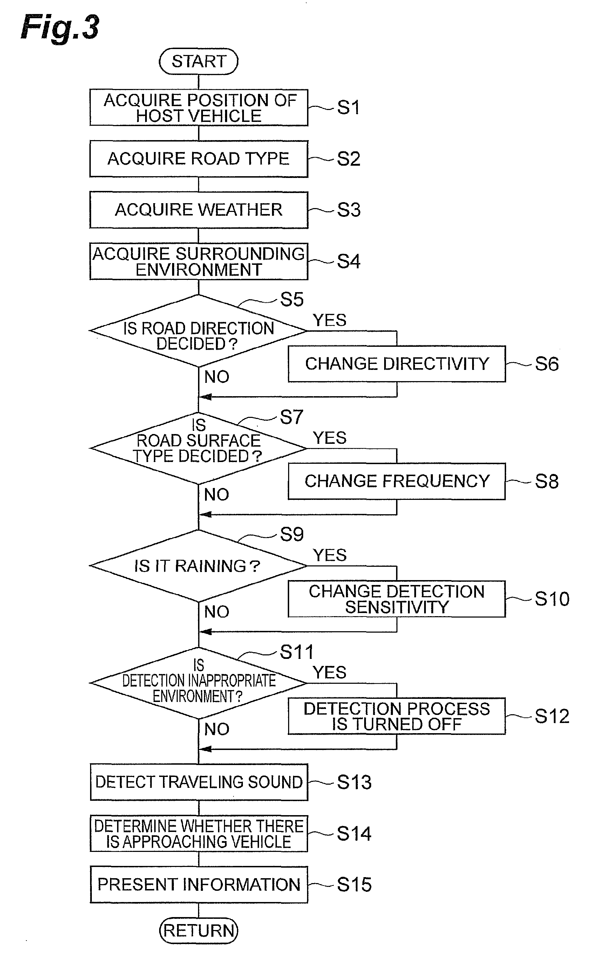

Next, the process sequence of the device for detecting sound outside vehicle according to this embodiment will be described. Fig. 3 is a flowchart illustrating the process sequence of the device for detecting sound outside vehicle according to this embodiment. As shown in Fig. 3, first, the device for detecting sound outside vehicle according to this embodiment acquires the position of the host vehicle (S1). The determining unit 13 acquires the position of the host vehicle on the basis of the traveling road vicinity information transmitted from the navigation device 3.

After the position of the host vehicle is acquired, the type of road on which the host vehicle travels is acquired as the traveling road information (S2). The determining unit 13 acquires the type of road on which the host vehicle travels on the basis of, for example, the traveling road vicinity information transmitted from the navigation device 3, the road information transmitted from the communication device 4, and the traveling road vicinity information transmitted from the imaging device 5 and the radar sensor 6.

In addition, weather information about the vicinity of the road on which the host vehicle travels is acquired as the traveling road information (S3). The determining unit 13 acquires the weather information from the traveling road vicinity information transmitted from the communication device 4. Then, the determining unit 13 acquires the surrounding environment information (S4). The surrounding environment information is acquired from various kinds of information transmitted from the navigation device 3, the communication device 4, the imaging device 5, and the radar sensor 6.

Then, it is determined whether the direction of the road on which the host vehicle travels is decided (S5). Specifically, it is determined whether the direction of the road on which the host vehicle travels is decided on the basis of, for example, the shape of the road on which the host vehicle travels. For example, when the host vehicle travels along a straight road without any intersection, it is decided that the host vehicle travels straight. When the host vehicle travels along an L-shaped road or a T-shaped road with only a right turn and the intersecting road is a one-way road from the left direction to the right direction, it is decided that the host vehicle turns right.

As a result, when the traveling direction of the host vehicle is decided, directivity, which is the sound collection characteristics of the microphones 2A to 2G, is changed (S6) and adjusted. When the directivity of the microphones 2A to 2G is changed, a characteristic change determination signal indicating a changed in the directivity of the microphones 2A to 2G is output to the characteristic change unit 14. The characteristic change unit 14 outputs the characteristic change signal indicating the change in the directivity of the microphones 2A to 2G to the microphone array processing unit 12 and the microphone array processing unit 12 changes the directivity of the microphones 2A to 2G (S6).

As means for adjusting the directivity of the microphones 2A to 2G, for example, the sensitivity of the sound collection information transmitted from the microphones which are close to the road on which an approaching vehicle is likely to travel, for example, the right microphones 2F and 2G in this embodiment, among the microphones 2A to 2G may be increased, and the sensitivity of the sound collection information transmitted from the other microphones 2A to 2E may be reduced.

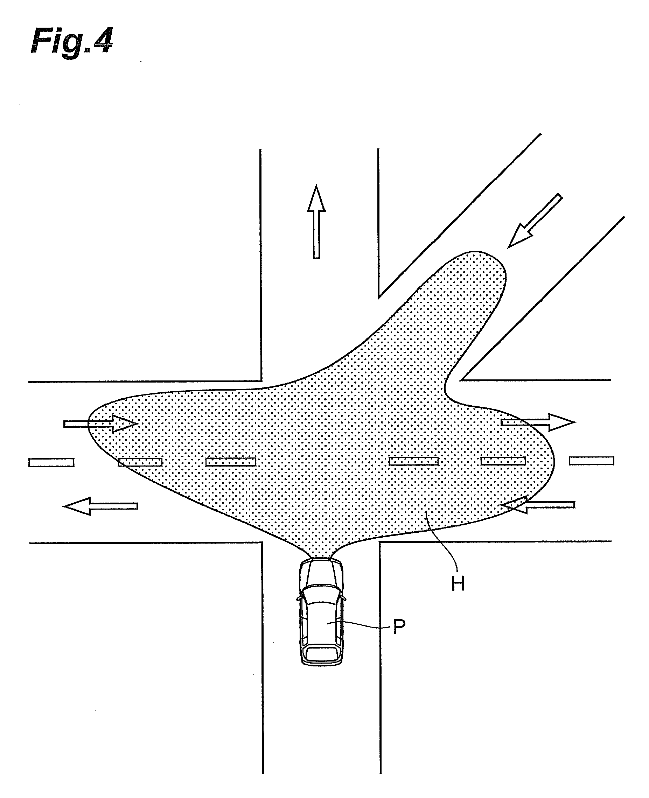

For example, as shown in Fig. 4, it is assumed that the host vehicle P reaches a five-way crossing and the five-way crossing includes two-way roads perpendicular to the road on which the host vehicle P travels, a straight one-way road, and a one-way road to which entrance diagonally forward right is prohibited. In Fig. 4, the direction in which the vehicle can travel is represented by an arrow. In this case, the road on which an approaching vehicle is likely to travel is the road perpendicular to the road on which the host vehicle P travels and the road extending diagonally forward right. Therefore, as represented by a region H in Fig. 4, the directivity of the microphones 2A to 2G is adjusted so as to correspond to the region including the road perpendicular to the road on which the host vehicle P travels and the road which extends diagonally forward right.

After the directivity is adjusted in this way or when it is determined in Step S5 that the direction of the road on which the host vehicle travels is not decided, it is determined whether the surface type of the road which is close to the road on which the host vehicle travels and on which an approaching vehicle travels is decided (S7). Specifically, it is determined whether the road surface type is decided, on the basis of whether information about the road surface type is included in the traveling road vicinity information transmitted from the navigation device 3 or information for deciding the road surface type is included in the road information from the communication device 4 and the traveling road vicinity information from the imaging device 5.

As a result, when it is determined that the road surface type can be decided, the microphone array processing unit 12 changes frequency characteristics as the sound collection characteristics collected from the sound collection information which is used for calculation to generate the sound source direction distribution data among the output sound collection information items (S8) and adjusts the frequency characteristics. When the road surface type varies, the band of the frequency indicating the approaching vehicle in the sound collection information varies. Therefore, as the adjustment aspect of the frequency characteristics, the frequency band of the sound collection information used for calculation is adjusted.

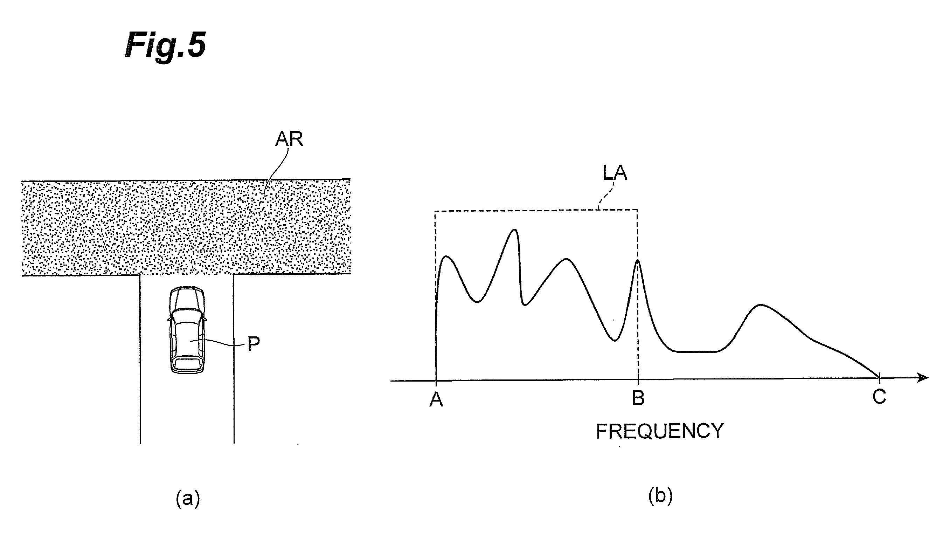

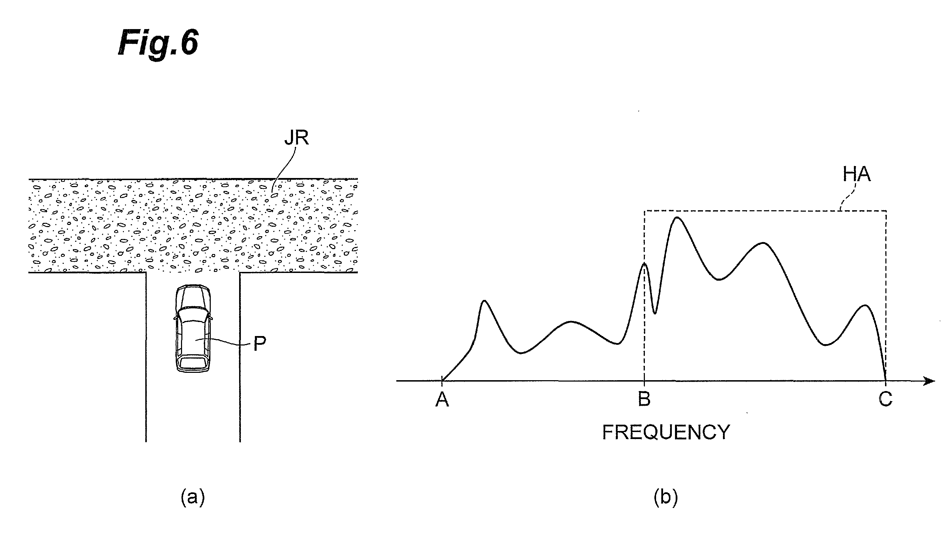

For example, as shown in Fig. 5(a), when the road which intersects the road on which the host vehicle P travels and on which an approaching vehicle travels is an asphalt road AR, as shown in Fig. 5(b), the frequency band indicating the approaching vehicle is remarkable in a low-frequency band LA from a first frequency A to a second frequency B. In addition, as shown in Fig. 6(a), when the road which intersects the road on which the host vehicle P travels and on which an approaching vehicle travels is a gravel road JR, as shown in Fig. 6 (b), the frequency band indicating the approaching vehicle is remarkable in a high-frequency band HA from the second frequency B to a third frequency C.

Therefore, when the road on which the approaching vehicle travels is the asphalt road AR, the influence of the sound collection information in the low-frequency band LA from the first frequency A to the second frequency B increases for determination. When the road on which the approaching vehicle travels is the gravel road JR, the sound collection information in the high-frequency band HA from the second frequency B to the third frequency C is mainly used.

After the frequency characteristics are changed or when it is determined in Step S7 that the road surface type cannot be specified, it is determined whether it is raining (S9). Specifically, it is determined whether it is raining on the basis of, for example, the weather information transmitted from the communication device 4 or the existence of raindrops extracted from the image which is captured by the imaging device 5.

As a result, when it is determined that it is raining, the microphone array processing unit 12 changes the detection sensitivity of the sound collection information as the sound collection characteristics used to generate the sound source direction distribution data (S10) and adjusts the detection sensitivity. The detection sensitivity of the sound collection information means detection sensitivity when the traveling sound of the approaching vehicle is detected from the sound collection information. When it is raining, the traveling sound of the approaching vehicle is more than that when it is sunny. Therefore, when it is raining and the approaching vehicle is far away, detection is performed in the same way as that when it is sunny and the approaching vehicle is close.

Therefore, when it is raining, the detection sensitivity of the sound collection information is reduced. When the detection sensitivity of the sound collection information is reduced, it is possible to detect a relatively loud traveling sound when it rains and a relatively low traveling sound when it is sunny at the same level. Therefore, for example, when there is an approaching vehicle and an alarm is output, it is possible to output the alarm at the same time when it is sunny and when it rains.

Instead of reducing the detection sensitivity of the sound collection information, the detection sensitivity of the microphone array 2 may be reduced. In this case, a detection sensitivity reduction signal may be transmitted from the characteristic change unit 14 to the microphone array 2, thereby reducing the detection sensitivity of each of the microphones 2A to 2G in the microphone array 2.

In addition, instead of reducing the detection sensitivity of the sound collection information, the output change unit 16 may delay the output of the alarm. In this case, a characteristic change determination signal for delaying the output of the alarm is output from the characteristic change unit 14 to the output change unit 16. The output change unit 16 can delay the output of the alarm to match the output time of the alarm when it is sunny and the output time of the alarm when it rains.

After the sensitivity of the sound collection information is changed or when it is determined in Step S9 that it is not raining, it is determined whether the traveling environment of the host vehicle is a detection inappropriate environment which is inappropriate to detect the traveling sound of the approaching vehicle (S11). For example, when there is a reflector including a large obstacle, such as a building or a tunnel, in the vicinity of the road on which the host vehicle travels, or when the traveling of the vehicle is greatly affected by sounds, the traveling environment of the vehicle is determined to be the detection inappropriate environment. The detection inappropriate environment is determined on the basis of surrounding environment information acquired from various kinds of information transmitted from the navigation device 3, the communication device 4, the imaging device 5, and the radar sensor 6.

As a result, when the traveling environment of the host vehicle is determined to be a detection inappropriate environment, a detection process by the generation of the sound source direction distribution data by the microphone array processing unit 12 is turned off such that the detection of the approaching vehicle is stopped (S12), thereby changing the sound collection characteristics of the microphones 2A to 2G. In the detection inappropriate environment, it is difficult to detect the approaching vehicle with high accuracy. Therefore, the detection process is turned off in a detection inappropriate environment to prevent the output of an unnecessary alarm from the display device 7 or an error in the output of the alarm.

Instead of turning off the detection process by the generation of the sound source direction distribution data by the microphone array processing unit 12, the output change unit 16 may stop the output of the alarm. In this case, a characteristic change determination signal for stopping the output of the alarm is output from the characteristic change unit 14 to the output change unit 16. The output change unit 16 can stop the output of the alarm to prevent the output of an unnecessary alarm from the display device 7 or an error in the output of the alarm.

After the detection process is turned off in this way or when it is determined in Step S 11 that the traveling environment of the host vehicle is not a detection inappropriate environment, the traveling sound of the approaching vehicle is detected (S13). In order to detect the traveling sound of the approaching vehicle, a calculation process is performed on the sound source direction distribution data which has been generated by the microphone array processing unit 12 and then stored in the vehicle detecting unit 15.

When the traveling sound of the approaching vehicle is detected, it is determined whether there is an approaching vehicle (S 14). Specifically, it is determined whether there is an approaching vehicle on the basis of the possibility that the approaching vehicle calculated on the basis of the detected traveling sound of the approaching vehicle arrives. When the possibility that the approaching vehicle arrives is greater than a predetermined threshold value, it is determined that there is an approaching vehicle. When the possibility that the approaching vehicle arrives is equal to or less than the predetermined threshold value, it is determined that there is no approaching vehicle.

Then, an information presenting process is performed (S 15). In the information presenting process, when it is determined that there is an approaching vehicle, approaching vehicle arrival information about the presence of the approaching vehicle and the approach direction thereof is output to the output change unit 16. The output change unit 16 performs an output process for outputting an alarm on the basis of the approaching vehicle arrival information. In the output process, information indicating the presence of the approaching vehicle and the approach direction of the approaching vehicle is output to the display device 7.

When the characteristic change determination signal is output from the characteristic change unit 14, the output change unit 16 changes the content of the output according to the output characteristic change determination signal. For example, when the characteristic change determination signal for delaying the output of the alarm is output, the output change unit 16 delays the output of the alarm. When the characteristic change determination signal for stopping the output of the alarm is output, the output change unit 16 stops the output of the alarm. In this way, the process of the device for detecting sound outside vehicle ends.

As such, the device for detecting sound outside vehicle according to this embodiment adjusts the detection characteristics when the traveling sound of the approaching vehicle is detected, according to a surrounding environment. Specifically, when the traveling direction of the host vehicle is decided, the directivity of the microphones 2A to 2G is adjusted according to the shape of the road on which the host vehicle travels. Therefore, it is possible to detect the traveling sound of the approaching vehicle according to the shape of the traveling road, such as the shape of the road or the number of intersections. As a result, it is possible to detect the traveling sound of the approaching vehicle with high accuracy.

When the traveling sound of a vehicle approaching the host vehicle is detected and the approaching vehicle is close, the display device 7 outputs an alarm. Therefore, the driver can recognize the presence of the approaching vehicle. As a result, the driver can prepare for a response to the presence of the approaching vehicle.

As the surrounding environment, the shape of the road on which the host vehicle travels is detected and the directivity of the microphones 2A to 2G is adjusted according to the shape of the road on which the host vehicle travels. Therefore, even when the road is at the intersection or is a one-way road, it is possible to detect the traveling sound of the approaching vehicle with high accuracy.

The type of road on which the approaching vehicle travels is detected and the frequency band used to detect the traveling sound of the approaching vehicle is adjusted according to the detected type of road. Therefore, it is possible to detect a traveling sound in the frequency band corresponding to the type of road on which the approaching vehicle travels. As a result, it is possible to detect the traveling sound of the approaching vehicle with high accuracy.

The sound collection information output from the microphone array processing unit 12 or the detection sensitivity of the microphones 2A to 2G is adjusted according to the weather. Specifically, when it is raining, the sound collection information output from the microphone array processing unit 12 or the detection sensitivity of the microphones 2A to 2G is reduced. When it rains, in general, the traveling sound of the approaching vehicle is louder than that when it is sunny, but it is possible to reduce an error in the detection of the approaching vehicle by reducing the sound collection information output from the microphone array processing unit 12 or the detection sensitivity of the microphones 2A to 2G.

When the traveling environment of the host vehicle is detected and is the detection inappropriate environment, the detection of the traveling sound of the approaching vehicle is stopped. Therefore, it is possible to prevent an unnecessary process of detecting the traveling sound of the approaching vehicle in a state in which the traveling sound of the approaching vehicle cannot be detected and prevent an operation error. In addition, it is possible to notify the driver that the traveling sound of the approaching vehicle is not detected. Therefore, the driver can recognize that the traveling sound of the approaching vehicle is not detected and focus attention on visually finding the approaching vehicle.

The preferred embodiment of the invention has been described above, but the invention is not limited to the above-described embodiment. In the above-described embodiment, when the directivity of the microphones is changed and adjusted, the sensitivity of the sound collection information transmitted from the microphones 2A to 2G is adjusted. However, for example, the directivity of the microphones 2A to 2G may be changed and adjusted.

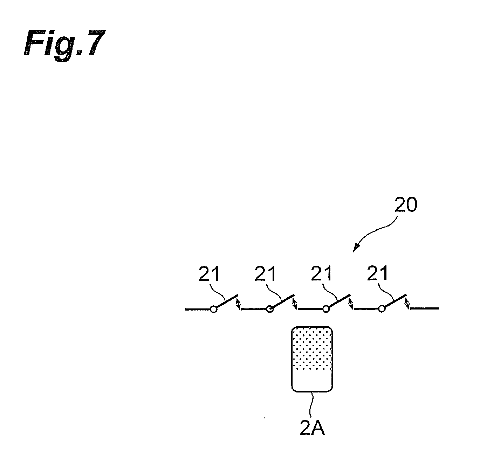

As the aspect in which the directivity of the microphones 2A to 2G is changed, a directivity adjusting device 20 may be provided in front of a sound collecting unit of the microphone 2A, as shown in Fig. 7. Although not shown in Fig. 7, similarly, the directivity adjusting devices 20 may be provided in front of the other microphones 2B to 2G.

In the directivity adjusting device 20 shown in Fig. 7, an opening and closing gate 21 is provided on the right side of the microphone 2A. The opening and closing gate 21 is opened to improve sound collection characteristics from the right side of the microphone 2A. Although not shown in Fig. 7, the opening and closing gate may be provided on the left side of the microphone 2A. In this case, similarly, it is possible to improve sound collection characteristics from the left side of the microphone 2A. Of course, the opening and closing gates may be provided on both the left and right sides of the microphone 2A.

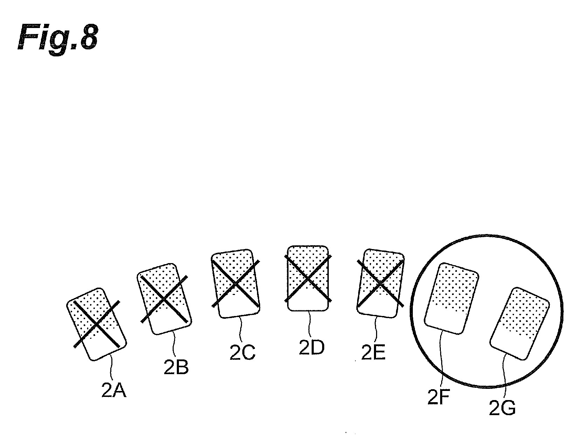

As shown in Fig. 8, each of the seven microphones 2A to 2G may have directivity. In this case, for example, in order to improve sound collection characteristics from the right side, the detection sensitivity of only two microphones 2F and 2G provided on the right side of the microphone array may be maintained, but the detection sensitivity of the other microphones 2A to 2E may be set to zero. In addition, the position or number of microphones whose detection sensitivity is maintained may be selected from the microphones 2A to 2G according to the position where it is desired to improve the sound collection characteristics.

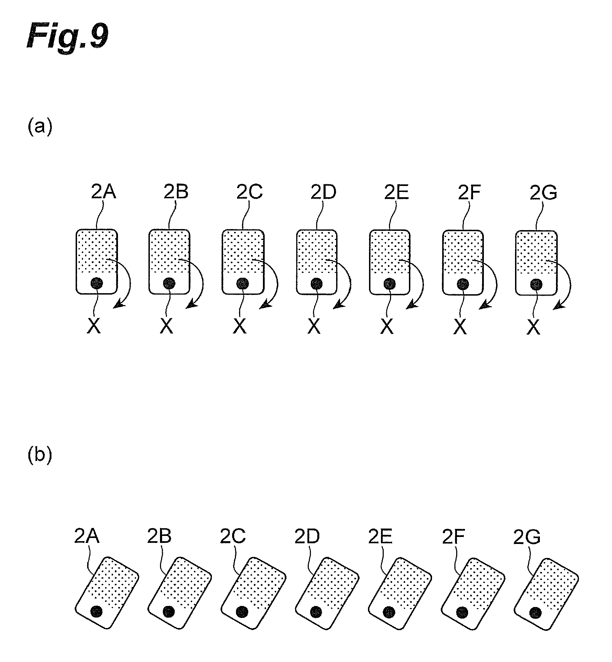

As shown in Fig. 9(a), a pivot shaft X may be provided at a position opposite to the sound collecting unit of each of the microphones 2A to 2G and the microphones 2A to 2G may be pivoted by a driving mechanism (not shown). In this case, for example, in order to improve the sound collection characteristics from the right side, as shown in Fig. 9(b), the microphones 2A to 2G are pivoted on the pivot shafts X such that the leading ends thereof face the right side. In this case, it is possible to appropriately determine, for example, the number of microphones to be pivoted or the pivot angle thereof according to the direction in which the sound collection characteristics are improved. In addition, two microphones 2F and 2G may be used on the right side and one microphone 2A may be used on the left side.

In the above-described embodiment, the microphone array 2 includes seven microphones 2A to 2G. However, the microphone array may include a plurality of microphones other than seven microphones. In addition, one microphone may be used instead of the microphone array.

In the above-described embodiment, the traveling sound of the approaching vehicle is used as an example of the sound outside the vehicle. However, other sounds outside the vehicle may be used. For example, an emergency vehicle siren, which is a sound generated from a movable body, or sounds generated by pedestrians may be used. In this case, the sound source direction detecting ECU 1 may be provided outside the vehicle according to the type of movable body.

In the above-described embodiment, for example, information about the shape of the road or information about a road surface type is acquired on the basis of various kinds of information transmitted from the navigation device 3, the communication device 4, the imaging device 5, and the radar sensor 6, but the invention is not limited thereto. For example, information about the shape of the traveling road or the road surface type acquired when the vehicle travels on the traveling road may be stored together with the traveling position. When the vehicle reaches the traveling road again, the stored information may be used.

### Industrial Applicability

The invention can be applied as a device for detecting sound outside vehicle that is provided in the vehicle and detects a sound outside vehicle, which is a sound outside the vehicle.

### Reference Signs List

- 1:: SOUND SOURCE DIRECTION DETECTING ECU
- 2:: MICROPHONE ARRAY
- 2A TO 2G:: MICROPHONE
- 3:: NAVIGATION DEVICE
- 4:: COMMUNICATION DEVICE
- 5:: IMAGING DEVICE
- 6:: RADAR SENSOR
- 7:: DISPLAY DEVICE
- 11:: A/D CONVERSION UNIT
- 12:: MICROPHONE ARRAY PROCESSING UNIT
- 13:: DETERMINING UNIT
- 14:: CHARACTERISTIC CHANGE UNIT
- 15:: VEHICLE DETECTING UNIT
- 16:: OUTPUT CHANGE UNIT
- 20:: DIRECTIVITY ADJUSTING DEVICE
- 21:: OPENING AND CLOSING GATE
- M:: DEVICE FOR DETECTING SOUND OUTSIDE VEHICLE
- P:: VEHICLE (HOST VEHICLE)

## Claims

1. A device for detecting sound outside vehicle comprising:
sound collecting means that is provided in a vehicle and collects sounds outside the vehicle;
target sound detecting means for detecting a detection target sound from the sounds outside the vehicle which are detected by the sound collecting means;
traveling road information detecting means for detecting traveling road information about a road on which the vehicle travels; and
sound collection characteristic adjusting means for adjusting sound collection characteristics of the sound collecting means on the basis of the detection result of the traveling road information detecting means.

2. The device for detecting sound outside vehicle according to claim 1, further comprising:
direction detecting means for detecting the direction of the detection target sound on the basis of the detection result of the target sound detecting means.

3. The device for detecting sound outside vehicle according to claim 1 or 2,
wherein the detection target sound is a traveling sound of an approaching vehicle which approaches the vehicle.

4. The device for detecting sound outside vehicle according to claim 3,
wherein the traveling road information detecting means detects the shape of the road on which the vehicle travels as the traveling road information.

5. The device for detecting sound outside vehicle according to claim 4,
wherein the sound collection characteristic adjusting means adjusts a directivity of the sound collecting means as characteristics of the sound collecting means on the basis of the shape of the traveling road.

6. The device for detecting sound outside vehicle according to claim 5,
wherein, when it is determined that the direction of the road on which the vehicle travels is decided on the basis of the shape of the traveling road, the sound collection characteristic adjusting means adjusts the directivity of the sound collecting means as the characteristics of the sound collecting means on the basis of the shape of the traveling road.

7. The device for detecting sound outside vehicle according to any one of claims 3 to 6,
wherein the traveling road information detecting means detects, as the traveling road information, the surface type of a road which is close to the road on which the vehicle travels and on which the approaching vehicle travels.

8. The device for detecting sound outside vehicle according to claim 7,
wherein the sound collection characteristic adjusting means adjusts a band used by the sound collecting means as the characteristics of the sound collecting means on the basis of the surface type of the road on which the approaching vehicle travels.

9. The device for detecting sound outside vehicle according to any one of claims 3 to 8,
wherein the traveling road information detecting means detects weather information about the vicinity of the road on which the vehicle travels as the traveling road information.

10. The device for detecting sound outside vehicle according to claim 9,
wherein the sound collection characteristic adjusting means changes the sensitivity of the sound collecting means on the basis of the weather information.

11. The device for detecting sound outside vehicle according to claim 9, further comprising:
output means for outputting an alarm when it is determined that the approaching vehicle is present on the basis of the detection result of the target sound detecting means,
wherein the sound collection characteristic adjusting means changes the time when the alarm is output from the output means on the basis of the weather information.

12. The device for detecting sound outside vehicle according to any one of claims 3 to 11,
wherein the traveling road information detecting means detects surrounding environment information about the vicinity of the vehicle as the traveling road information.

13. The device for detecting sound outside vehicle according to claim 12,
wherein, when it is determined that an environment in which the vehicle travels is inappropriate to detect the traveling sound of the approaching vehicle on the basis of the surrounding environment information, the target sound detecting means stops the detection of the traveling sound of the approaching vehicle.

14. The device for detecting sound outside vehicle according to claim 13,
wherein, when the detection of the traveling sound of the approaching vehicle is stopped, it is notified that the traveling sound of the approaching vehicle is not detected.

15. The device for detecting sound outside vehicle according to claim 12, further comprising:
output means for outputting an alarm when it is determined that the approaching vehicle is present on the basis of the detection result of the target sound detecting means,
wherein, when it is determined that an environment in which the vehicle travels is inappropriate to detect the traveling sound of the approaching vehicle on the basis of the surrounding environment information, the output means stops the output of the alarm.
